# EUROPEAN PATENT APPLICATION

(11) **EP 4 343 676 A1**
(43) Date of publication of application: **27.03.2024**
(21) Application number: 22197332.4
(22) Date of filing: 23.09.2022
(51) Int. Cl.: G06T 3/40, F03D 80/50

(54) **METHOD FOR GENERATING A COMPOSITE IMAGE OF A SURFACE OF AN ELONGATED OBJECT**

(71) Applicant: Sulzer & Schmid Laboratories AG, 8618 Oetwil am See (CH)
(72) Inventor: DIETSCHE, Friedrich Alexander, 8704 Herrliberg (CH); STREICHENBERG, Lucas, 8730 Uznach (CH); ASIKAINEN, Joonas, 8057 Zürich (CH)
(74) Representative: Frei Patent Attorneys

(57) **Abstract**

A composite image of a surface of an elongated object (12), such as a wind turbine blade, is generated from source images (1) by mapping them onto a reference surface (14), thereby generating normalised images (2). Characteristic image features (3) are detected, and pairs of normalised images (2) are fused by determining a relative transformation so that the positions of corresponding characteristic features in the images match. An image transformation is determined that, when applied to the normalised images (2) results in geometric relations between the characteristic features in the normalised images (2) being at least approximately the same. A fused image (5) is formed by applying the image transformation and the relative transformation to the normalised images (2) and combining the resulting images.

## Description

The invention relates to the field of digital image processing. It relates to a method for generating a composite image of a surface of an elongated object as described in the preamble of the corresponding independent claims.

In monitoring the state of technical systems, it may be the case that visual inspection is performed on the basis of images of the systems. Digital images are presented to a human user who can identify and mark salient image features, such as features related to defects. Usually, multiple images are captured that in combination show a surface of an object to be inspected. The images overlap, and the user must take into account that regions of the surface, and features in these regions, can appear on more than one image and under different perspectives, depending on the position of a camera capturing the images. In order to reduce the cognitive load on a user, it is desirable to have an image of the entire object's surface that combines the separate, multiple images into a single view. The same need arises if the analysis takes place by an automated system, that is, a computer-based system that identifies features such as defects. For such an automated system, a composite image can be the starting point for analysis.

Visual inspection by human users or by automated systems are of particular interest for monitoring the blades of wind turbines. Such blades have lengths of, for example twenty metres or more. Images of a blade can be captured by flying an unmanned aerial vehicle (UAV) along the blade, resulting in a sequence of images, each image comprising a section of the blade. The image can show the leading edge, the trailing edge and the surface of the blade.

It is an object of the invention to create a method for generating a composite image of a surface of an elongated object of the type mentioned initially, which is improved, with regard to existing systems, with regard to at least one of robustness and computational efficiency.

These objects are achieved by a method according to the corresponding claims.

The method, to be executed in a computer-based data processing system, is for generating a composite image of a surface of an elongated object, in particular a wind turbine blade, wherein the elongated object comprises a **longitudinal axis.** The method comprises the steps of
retrieving a sequence of overlapping **source images** of the object;
for each source image, performing a normalisation and analysis by
   - retrieving 3D data representing a **spatial location of surface points** relative to a location of a camera at the time that source image data was recorded by the camera;
   - generating a **normalised image** from the source image by mapping the source image onto a reference surface;
   - in the normalised image, detecting **characteristic features** of the image;
fusing pairs of normalised images by,
   - for a pair of consecutive normalised images, comprising a first and a second normalised image,
   - determining **corresponding pairs** of characteristic features of the first and second normalised image, each corresponding pair comprising a respective first characteristic feature in the first normalised image and a respective second characteristic feature in the second normalised image;
   - determining, from the first and second normalised images, a **relative transformation** that relates the first and second normalised images so that for each corresponding pair of characteristic features, the position of the first characteristic feature at least approximately matches the position of the second characteristic feature;
   - determining, from the first and second normalised images, an **image transformation** that, when applied to at least one of the first and second normalised images results in geometric relations between the first characteristic features being at least approximately the same as between the second characteristic features;
   - forming a **fused image** by applying the image transformation and the relative transformation to the first and second normalised images and **combining** the resulting images.

Typically, the step of fusing pairs of normalised images is repeated until all images of the sequence of source images are combined, resulting in the composite image of the object.

A fused image can itself be used as a normalised image in a further fusing step.

Consequently, when fusing a pair of normalised images, the two normalised images involved can be the result of a normalisation and analysis of respective source images, or one or both can be the result of a fusing step.

A sequence of normalised images can be fused in different ways. For example, they can be fused one after the other, beginning at one end of the sequence, and adding one image after the other to a growing set of fused images. Alternatively, subsets of the sequence can be combined by fusing, and then these combined subsets can be fused.

In embodiments, each source image of the sequence is captured from a different location on a path that extends along a direction of a longitudinal axis of the elongated object.

Consequently, each source image has one or two adjacent source images, a preceding and/or a succeeding source image. The source images overlap but cannot be simply combined because image portions in overlapping regions are distorted due to being captured from different perspectives.

In embodiments, the step of retrieving 3D data representing a **spatial location of surface points** comprises retrieving 3D measurement data that was recorded together with the sequence of source images, in particular simultaneously with this sequence and using a mobile platform comprising a camera capturing the sequence of source images and the 3D measurement data.

In embodiments, the 3D measurement data is recorded with 2D or 3D distance sensing device, for example by a laser range finder scanning either a line or an entire surface. The 3D measurement data can be combined with information about the UAV's pose at the time the 3D measurement data and a corresponding source image was recorded, thereby determining 3D measurement points in a stationary reference system that is common to all images.

In embodiments, the 3D data is determined from a computer model of the object and from a known location of the camera at the time each source image was captured.

In embodiments, the step of generating a **normalised image** from a source image comprises
- projecting the source image onto a modelled surface of the object, defined by the 3D data;
- from the modelled surface, projecting the image onto the reference surface, preferably by a parallel projection onto the reference surface and wherein the reference surface is plane.

The first step is similar to rendering the source image onto a - at least partial - 3D model of the object, and gives the original relative location of image patches in 3D space.

The second step has the effect of generating the normalised image, wherein distortions and deviations caused by varying distance from camera to the object and from varying orientation of the source image are, to a large extent, removed.

In embodiments,
- the **step of detecting characteristic features** comprises specifically searching for and detecting **edge features** that extend in the same general direction as the longitudinal axis, in particular at an angle of less than thirty degrees from the longitudinal axis, as seen in the normalised image; and
- in the **step of determining the image transformation,** the image transformation is determined to comprise at least scaling one or both of the normalised first and second images with a first scaling axis that is generally normal to the longitudinal axis, in particular with a first scaling axis that deviates from the direction normal to the longitudinal axis by less than thirty degrees; wherein the scaling makes a distance between the at least two first edge features equal to a distance between the at least two second edge features, seen along the first scaling axis and in the respective transformed image.

In embodiments, the step of determining corresponding pairs of characteristic features of the first and second normalised image, each corresponding pair comprises a respective first edge feature in the first normalised image and a respective second edge feature in the second normalised image.

In embodiments, in the step of determining corresponding pairs of characteristic features of the first and second normalised image, each corresponding pair comprises several respective first surface features in the first normalised image and several respective second surface features in the second normalised image.

Limiting the search to **edge features** that extend in a certain direction makes the method simpler, more accurate and more reliable than a procedure that has no constraints on the properties of characteristic feature used. This is the case both for the step of detecting the characteristic features as well as for the further steps: by constraining the space of features to be found and matched to one another, the solution space is reduced dramatically.

In embodiments, only edge features are searched for that deviate from the longitudinal axis by less than twenty degrees.

In embodiments, the first scaling axis deviates from the direction normal to the longitudinal axis by less than twenty degrees.

In embodiments, the first scaling axis is parallel to one of the axes of the normalised image.

In embodiments, the scaling preserves the aspect ratio of the image. That is, the image is scaled by the same scaling factor in the direction of the first scaling axis and the direction normal to the first scaling axis.

In embodiments, relative rotation between the images around an axis normal to the image plane is not corrected for. Correspondingly, while the source images are captured, the pose of the camera is controlled to keep at least the camera roll angle constant, and optionally also to keep the camera pitch angle constant for different source images. In embodiments, the pose of the camera is controlled passively, for example by mechanical means, such as a gimbal mechanism. In embodiments, it is controlled actively, for example by a control loop comprising sensors and actuators.

In embodiments, the edge features correspond to opposite edges of the object, as seen in the normalised image, in particular to leading edges and trailing edges of a turbine blade.

This further allows to reduce the search space for features, in that the detection of characteristic feature can be configured to look for exactly two edges in each normalised image.

Then, if the object is a turbine blade, a first corresponding pair of edge features is from its leading edge, and a second corresponding pair of edge features is from its trailing edge.

In embodiments, in the **step of determining the relative transformation,** the relative transformation is determined to comprise a translation along the first scaling axis so that the positions of the edge features from the first and second normalised images, seen in the direction of the first scaling axis, coincide at least approximately.

In more detail, this means that in a combined image resulting from arranging the first and second normalised images according to the relative transformation, the positions of the edge features originating from the first and second normalised images, seen in the direction of the first scaling axis, coincide at least approximately. The resulting transformation typically comprises a translation only in the direction of the first scaling axis.

In embodiments,
- the **step of detecting characteristic features** comprises detecting surface features within an object region of the normalised image;
- in the **step of determining corresponding pairs** of characteristic features of the first and second normalised image, each corresponding pair comprises a respective first surface feature in the first normalised image and a respective second surface feature in the second normalised image.

In embodiments, the step of determining **the image transformation** comprises at least scaling one or both of the normalised first and second images with a second scaling axis that is generally **parallel** to the longitudinal axis, in particular with a second scaling axis that deviates from the direction of the longitudinal axis by less than thirty degrees; wherein the scaling makes a distance between the at least two first surface features equal to a distance between the at least two second surface features, seen along the second scaling axis and in the respective transformed image.

In embodiments, in the **step of determining the relative transformation,** the relative transformation is determined to comprise a translation so that the surface features from the first and second normalised images coincide at least approximately.

In more detail, this means that in a combined image resulting from arranging the first and second normalised images according to the relative transformation, the surface features originating from the first and second normalised images coincide at least approximately. The resulting transformation typically comprises a translation in both the direction of the first and the second scaling axis.

In order to combine the images, it is not mandatory to scale the images in the direction of the longitudinal axis in a manner that takes into account distances between features in this direction. It can be sufficient to scale and translate the images in the direction generally normal to the longitudinal axis, and to preserve their aspect ratio. In particular, the edge features can be used for scaling and translating the images relative to one another in the direction of the first scaling axis generally normal to the longitudinal axis. In a complementary fashion, the surface features can be used for translating the images relative to one another in the general direction of the longitudinal axis. In this way, a simple and efficient procedure can be implemented, that relies on a limited set of characteristic features. Furthermore, the space of relative positions need not be considered in full, rather each dimension is handled separately. That is, in summary:
- When determining the relative transformation based on surface features, the search space can be reduced to translations alone. Optionally it can include small rotations.
- When determining the image transformation, only one dimension need be considered, and in particular a scaling factor and an adjustment of the relative transformation can be determined on the basis of edge features, which are easy to identify.

Thus, a priori knowledge about the nature of the object and thus the images is used to simplify and streamline their analysis.

In embodiments, the steps of
- determining the relative transformation; and
- determining the image transformation;
are performed in this order.

In embodiments, the steps of
- determining the relative transformation; and
- determining the image transformation;
are iteratively repeated.

The first time that the relative transformation is determined, this typically corresponds to translating the two normalised images in the direction of both the first and the second scaling axis, so that the features overlap at least approximately. Then, determining the image transformation adjusts the relative scale of the two translated images. This can be done relatively precisely because it can be based on the edge features. It can be followed by adjusting the relative transformation in the direction of only the first scaling axis, also on the basis of the edge features. The scaling and adjusting moves the relative position of the features in the two images. Determining the relative transformation once more, on the basis of the surface features in the translated and scaled images, further changes the translation and improves the overlapping of the features. The result can again be used to adjust the scaling, etc. Iterative repetition of these steps can be terminated when the amount of translation and/or scaling falls under a threshold.

In embodiments, one of the first and second normalised images is equal to the corresponding transformed image. This can be considered a transformation by the identity transform. Only for the other normalised image is a non-identity transform to the corresponding transformed image determined.

In embodiments, **in the step of combining** the first and second transformed images a transition between these transformed images is effected by a hard transition from the first to the second transformed image within a region in which they overlap.

That is, in the overlap region one of the transformed images abruptly changes to the other one. This has the advantage of not obscuring imperfections that might have appeared in the process. Thereby, analysis of the fused image can also assess the quality of the combination of the images.

In embodiments, **in the step of combining** the first and second transformed images a transition between these transformed images is effected by blending the them in a region in which they overlap.

That is, in the overlap region one of the transformed images fades out and the other one fades in.

This has the advantage of providing a continuous transition from one image to the adjacent one, but the potential disadvantage of losing small details.

A computer-based data processing system for generating a composite image of a surface of an elongated object, in particular a wind turbine blade, is programmed to perform the method according to one of the preceding claims.

In an embodiment, a **computer program product** for generating a composite image of a surface of an elongated object is loadable into an internal memory of a digital computer or a computer system, and comprises computer-executable instructions to cause one or more processors of the computer or computer system execute the method for generating a composite image of a surface of an elongated object. In another embodiment, the computer program product comprises a **computer readable medium** having the computer-executable instructions recorded thereon. The computer readable medium preferably is non-transitory; that is, tangible. In still another embodiment, the computer program is embodied as a reproducible **computer-readable signal,** and thus can be transmitted in the form of such a signal.

A **method of manufacturing** a non-transitory computer readable medium, comprising the step of storing, on the computer readable medium, computer-executable instructions which when executed by a processor of a computing system, cause the computing system to perform the method for generating a composite image of a surface of an elongated object.

Further embodiments are evident from the dependent patent claims. Features of the method claims may be combined with features of the device claims and vice versa.

The subject matter of the invention will be explained in more detail in the following text with reference to exemplary embodiments which are illustrated in the attached drawings, which schematically show, in
- Figure 1: a wind turbine and an UAV capturing pictures of a turbine blade;
- Figure 2: a sequence of images in relation to the object being imaged;
- Figure 3: steps in processing to images of a sequence of images; and
- Figure 4: projections from a source image to a normalised image 2.

The reference symbols used in the drawings, and their meanings, are listed in summary form in the list of reference symbols. In principle, identical parts are provided with the same reference symbols in the figures.

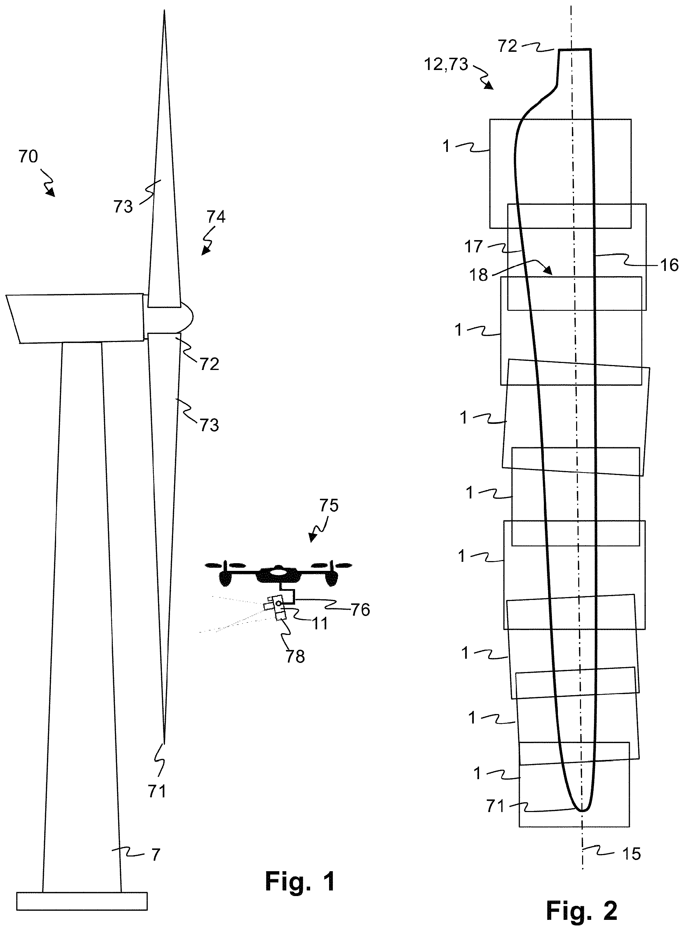

**Figure 1** shows a wind turbine 70 and an unmanned aerial vehicle (UAV) 75 capturing pictures of a turbine blade 73 The wind turbine 70 comprising a tower 7 supporting a nacelle enclosing a drive train driving an electrical generator via a gearbox. Turbine blades 73 are arranged on a hub to form a rotor 74 driving the drive train. Each blade 73 is typically attached at its root end 72, and then "spans" radially "outboard" to a free end or tip 71. The UAV 75 comprises a gimbal support 76 carrying sensors, in particular a camera 11 and a 2D or 3D distance sensing device or range finder 78. The UAV is controlled to fly along the turbine blade 73 and capture a series of source images 1 with the camera 11, at the same time operating the range finder 78 and saving the source images 1 and 2D or 3D distance or range data in association with one another and/or a time and/or position and orientation of the sensors.

**Figure 2** shows a sequence of source images 1 in relation to an object 12 to be inspected. In this case, the object 12 being the blade 73 of a wind turbine, it has a leading edge 16, a trailing edge 17 and a blade surface 18 in between. At the trailing edge 17, so-called trailing edge serrators (not shown) can be arranged for aerodynamical purposes. The turbine blade 12 extends along a longitudinal axis 15, which corresponds to an axis along which the blade 73 has its maximum extension, from the blade root 72 to the blade tip 71. Due to imperfections in the positioning of the camera capturing the source images 1, the source images are taken at different distances from the blade, and with varying orientations. As a result, for each source image 1 the field of view of the camera varies in size and orientation relative to the blade 73, and the resulting perspective view of the blade 73 differs.

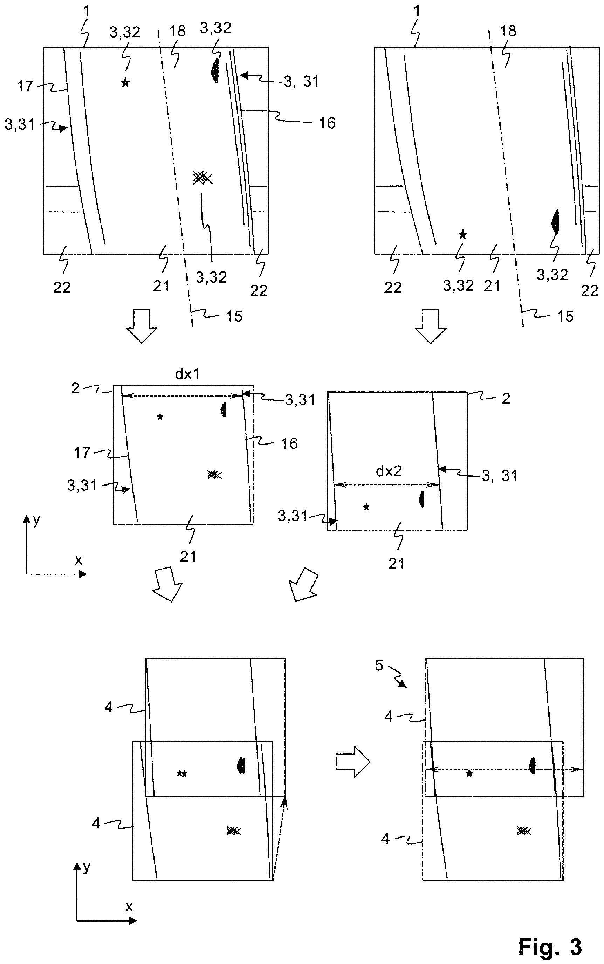

**Figure 3** shows steps in processing two consecutive images from the sequence of images. The process begins with two consecutive source images 1 taken at different, adjacent locations along the longitudinal axis 15. The source images 1 are shown in the top row of images. The blade surface 18 of the turbine blade 12 appears in the images as an object region 21, separate from a background region 22 of the image.

The two source images 1 overlap, and thus characteristic features 3 corresponding to the same physical features on the turbine blade 12 appear in both source images 1. The characteristic features 3 can be edge features 31 and/or surface features 32. Due to the different perspectives and relative camera locations under which the characteristic features 3 were captured, the distances and angles between characteristic features 3 are not the same in the two source images 1. A further cause of differences can be the optical characteristics of a lens system used.

Overview of the procedure: For each of the source images 1, a corresponding normalised image 2 is determined, and characteristic features 3 are detected. Two consecutive normalised images 2 (shown in Fig. 3 in the second row of images) are transformed, typically scaled, for example either one image or both images are scaled, and a relative transformation between them is determined. The transformations define transformed images 4. The transformations can be iteratively adjusted. Applying the transformations to the normalised images and overlaying the transformed images 4 generates a fused image 5 in which the characteristic features coincide.

In embodiments, camera stabilisation during acquisition of the images is sufficiently good to eliminate relative rotation between the images. In such cases, a correction of relative rotation between the images is not required. In other embodiments, where such a correction is required, it is part of the normalisation step. For example, it can be done on the basis of the camera position and orientation recorded for each image at the time the image was captured. For example, in the course of image normalisation, the image is rotated to compensate for camera roll, according to a measurement of the roll angle. Alternatively, the correction can be done by extracting the relative rotation between images on the basis of a generalised image correlation method. Regardless of the way in which the correction is done, or the need for correction is eliminated to begin with, the resulting images shall be called "roll-adjusted".

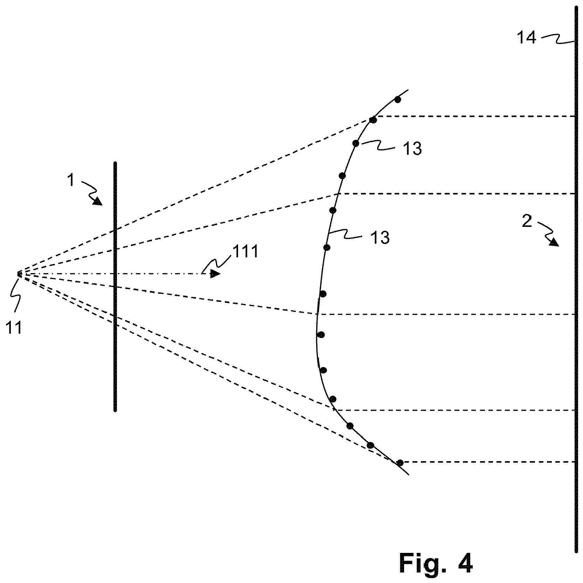

In a first processing step, from each source image 1 a normalised image 2 is generated by projecting (first projection) the source image 1 onto a 3D surface of the turbine blade 12, and then (second projection) from there onto a reference surface 14. This is illustrated in **Figure 4. Figure 4** shows range measurement points as points, and interpolated surface points 13 as a line. The figure shows a 2D cross section of the 3D projection geometry.

The first projection is defined by parameters of the camera 11, such as sensor size, sensor resolution, focal length, as well as the geometry of the reference surface 14.

The 3D surface of the turbine blade 12 can be obtained from range measurements taken by a range scanner arranged on the UAV at the same time the source images 1 were captured. The range measurements can be smoothed and interpolated in order to return the position of an arbitrary turbine blade surface point 13 on the turbine blade 12, when computing the projection of the source image 1 onto the surface of the turbine blade 12. For example, from a sequence of 2D or 3D laser scans, combined with an associated pose (position and orientation) of the range scanner, which in turn can be determined from the pose of the UAV, a point cloud representing the blade surface is computed. Based on this, known surface reconstruction algorithms can be used to derive a smoothed approximation of the reference surface.

In another embodiment, the 3D surface is obtained from a 3D model of the turbine blade 12 and information about the position and orientation of the camera 11 relative to the turbine blade 12 at the time each source image 1 was captured. Such position and orientation information can be based on navigation sensors such as satellite-based navigation units (GPS and others), navigation based on local landmarks or beacons, differential sensors, and combinations of such sensors and associated methods.

The second projection is a parallel projection onto a reference surface 14. The reference surface 14 typically is parallel to the plane of the sensor of the camera, that is, normal to the viewing direction 111 of the camera.

The projection in the reference surface 14 is considered to be the normalised image 2. Ideally, at least the scale of the normalised images 2 would be the same so that the normalised images 2 could be joined without further scaling. However, there can be inaccuracies in the normalisation process, caused, for example, by inaccuracies in the underlying pose data and/or in the positioning of the UAV with regard to the object 12. As a result, in practice the normalised images 2 generally need to be **scaled,** at least in a direction that is generally normal to the longitudinal axis 15. In any case, the normalised images 2 must be **translated** relative to one another generally in this direction, corresponding to the flight path of the UAV, so that the leading and trailing edges in the two images overlap and match one another.

In order to do so, a feature analysis is performed in order to determine edge features 31, corresponding to the leading edge 16 and trailing edge 17. This analysis can be improved and sped up by taking into account that the edges run - within known bounds - generally parallel to the longitudinal axis 15. So, an edge detection algorithm can be constrained by the a priori knowledge that the edge runs, for example, in a direction within twenty or thirty degrees of the direction of the longitudinal axis 15. Specifically for the edge features 31, well-known edge detection algorithms can be used, such as the Canny method, and can be combined with, for example, the Hough transform for line detection.

Here and in the following, axes or directions x, y and distances dx, dy are understood to relate to image coordinates. And when reference is made to the longitudinal axis 15 or other features of the object 12, it is understood to relate to such a feature as it appears in the images.

In addition to edge features 31, the feature analysis also determines surface features 32. The surface features 32 can be characterised by visual descriptors. Descriptors can be low level descriptors which give a description about colour, shape, regions, textures, etc..., associated with a location in the image. Feature analysis can be done with known feature detection methods, such as scale-invariant feature transform (SIFT), Oriented FAST and rotated BRIEF (ORB), etc.

**First matching step:** Based on surface features 32 in an overlapping region of the two normalised images, first surface features 32 in a first normalised image 2 can be matched with second surface features 32 in a second normalised image 2. Based on these matches, an image transformation is determined that specifies a relative transformation between the two normalised images 2 that causes matching surface features 32 from the first and second normalised image 2 to coincide at least approximately.

Typically, this relative transformation is a translation. Furthermore, if the sequence of source images was obtained by the UAV flying in along the direction of the longitudinal axis 15 of the elongated object 12, then the transformation will be a translation in a direction generally parallel to the longitudinal axis 15 as seen in the images.

In embodiments, in which the normalised images 2 are not roll-adjusted, the relative transformation can also comprise a relative rotation between the normalised images 2. This results in a roll-adjustment at the matching stage. When determining the amount of rotation, a priori knowledge about the situation can be used to eliminate implausible values. For example, the angle can be limited to values lower than 30° or 20° or 10°. This reduces the search space when matching the surface features 32 in search for the relative translation and rotation.

Due to imperfections in the matching of the surface features 32, and due to differences in scaling, the images, when transformed according to the relative transformation, will not match perfectly. The matching is improved by the following steps: on the one hand an image transformation is applied, and the relative transformation is adjusted, based on the edge features 31:
**Second matching step:** Having detected the leading edge 16 and trailing edge 17 in both consecutive normalised images 2, the distance dx1, dx2 between them within the normalised images 2 can be computed, for example in pixels. Then an image transformation for one or both of the normalised images 2 is determined such that the corresponding distances after the image transformation, for example in transformed images 4 resulting from the image transformation are the same (if the image transformation is applied to only one of the two images, the other one shall nevertheless also be labelled a transformed image, in order not to complicate the following explanations).

The image transformation typically is a scaling, along a first scaling axis that is generally normal to the longitudinal axis 15, and with a scaling factor determined by the ratio between the distances dxl, dx2. Preferably, the aspect ratio is maintained, thus, the scaling factor in the direction normal to the first scaling axis is the same. If the longitudinal axis 15 at the time the source images 1 were captured is at least approximately vertical, and the images are roll-adjusted, then the first scaling axis can be chosen to be the horizontal direction x in the normalised images 2.

In order to align the transformed images 4 with each other, for example, when laying them over one another to form a fused image 5, the relative transformation is adjusted, corresponding to a translation of the two transformed images 4 relative to one another such that the leading edges 16 in both transformed images 4 coincide, and the trailing edges 17 in both transformed images 4 coincide in the fused image 5. This adjustment of the relative translation can be in the direction of the first scaling axis only, the translation in the orthogonal direction (in a direction generally parallel to the longitudinal axis 15) being accomplished in the preceding step based on the surface features 32.

If several surface features 32 exist that are distanced from one another in a direction generally parallel to the longitudinal axis 15 and are visible in both normalised images 2, then the normalised images 2 can be scaled along this direction, with a corresponding second scaling axis y. However, this is only optional.

The scaling done in the second matching step can reduce the quality of the matching achieved in the first matching step. For this reason, the first matching step can be repeated, further adjusting the relative transformation. And then the second matching step can be repeated, further adjusting the image transformation and, in one direction only, the relative transformation. The first matching step and second matching step can be iteratively repeated until the resulting quality of the matching, expressed for example by decreasing values for adjusting the relative transformation and image transformation.

While the invention has been described in present embodiments, it is distinctly understood that the invention is not limited thereto, but may be otherwise variously embodied and practised within the scope of the claims.

## Claims

1. A method, executed in a computer-based data processing system, for generating a composite image of a surface of an elongated object (12), in particular a wind turbine blade, wherein the elongated object (12) comprises a **longitudinal axis** (15), the method comprising the steps of
retrieving a sequence of overlapping **source images** (1) of the object;
for each source image, performing a normalisation and analysis by
• retrieving 3D data representing a **spatial location of surface points** (13) relative to a location of a camera (11) at the time that source image data was recorded by the camera (11);
• generating a **normalised image** (2) from the source image (1) by mapping the source image onto a reference surface (14);
• in the normalised image (2), detecting **characteristic features** (3) of the image;
fusing pairs of normalised images (2) by,
• for a pair of consecutive normalised images (2), comprising a first and a second normalised image (2),
• determining **corresponding pairs** of characteristic features (3) of the first and second normalised image (2), each corresponding pair comprising a respective first characteristic feature (3) in the first normalised image and a respective second characteristic feature (3) in the second normalised image;
• determining, from the first and second normalised images (2), a **relative transformation** that relates the first and second normalised images (2) so that for each corresponding pair of characteristic features, the position of the first characteristic feature at least approximately matches the position of the second characteristic feature;
• determining, from the first and second normalised images (2), an **image transformation** that, when applied to at least one of the first and second normalised images (2) results in geometric relations between the first characteristic features being at least approximately the same as between the second characteristic features;
• forming a **fused image** (5) by applying the image transformation and the relative transformation to the first and second normalised images (2) and **combining** the resulting images.

2. The method of one of the preceding claims, wherein each source image (1) of the sequence is captured from a different location on a path that extends along a direction of a longitudinal axis (15) of the elongated object (12).

3. The method of one of the preceding claims, wherein the step of retrieving 3D data representing a **spatial location of surface points** (13) comprises retrieving 3D measurement data that was recorded together with the sequence of source images (1), in particular simultaneously with this sequence and using a mobile platform comprising a camera (11) capturing the sequence of source images (1) and the 3D measurement data.

4. The method of one of the preceding claims, wherein the step of generating a **normalised image** (2) from a source image (1) comprises
• projecting the source image (1) onto a modelled surface of the object (12), defined by the 3D data;
• from the modelled surface, projecting the image onto the reference surface (14), preferably by a parallel projection onto the reference surface (14) and wherein the reference surface (14) is plane.

5. The method of one of the preceding claims, wherein
• the **step of detecting characteristic features** (3) comprises specifically searching for and detecting **edge features** (31) that extend in the same general direction as the longitudinal axis (15), in particular at an angle of less than thirty degrees from the longitudinal axis (15), as seen in the normalised image (2); and
• in the **step of determining the image transformation,** the image transformation is determined to comprise at least scaling one or both of the normalised first and second images (3) with a first scaling axis that is generally normal to the longitudinal axis (15), in particular with a first scaling axis that deviates from the direction normal to the longitudinal axis (15) by less than thirty degrees; wherein the scaling makes a distance between the at least two first edge features (31) equal to a distance between the at least two second edge features (31), seen along the first scaling axis and in the respective transformed image (4).

6. The step of claim 5, wherein the edge features (31) correspond to opposite edges of the object (12), as seen in the normalised image (2), in particular to leading edges (16) and trailing edges (17) of a turbine blade.

7. The step of claim 5 or 6, wherein in the **step of determining the relative transformation,** the relative transformation is determined to comprise a translation along the first scaling axis so that the positions of the edge features (31) from the first and second normalised images (2), seen in the direction of the first scaling axis, coincide at least approximately.

8. The method of one of the preceding claims, wherein
• the **step of detecting characteristic features** comprises detecting surface features (32) within an object region (21) of the normalised image (2);
• in the **step of determining corresponding pairs** of characteristic features (3) of the first and second normalised image (2), each corresponding pair comprises a respective first surface feature (32) in the first normalised image and a respective second surface feature (32) in the second normalised image.

9. The method of one of the preceding claims, wherein in the **step of determining the relative transformation,** the relative transformation is determined to comprise a translation so that the surface features (32) from the first and second normalised images (2) coincide at least approximately.

10. The method of one of the preceding claims, wherein the steps of
• determining the relative transformation; and
• determining the image transformation;
are performed in this order.

11. The method of one of the preceding claims, wherein the steps of
• determining the relative transformation; and
• determining the image transformation;
are iteratively repeated.

12. The method of one of the preceding claims, wherein **in the step of combining** the first and second transformed images (4) a transition between these transformed images (4) is effected by a hard transition from the first to the second transformed image (4) within a region in which they overlap.

13. The method of one of claims 1 to 11, wherein **in the step of combining** the first and second transformed images (4) a transition between these transformed images (4) is effected by blending the them in a region in which they overlap.

14. A computer-based data processing system for generating a composite image of a surface of an elongated object (12), in particular a wind turbine blade, programmed to perform the method according to one of the preceding claims.
